# EUROPEAN PATENT APPLICATION

(11) **EP 2 345 808 A2**
(43) Date of publication of application: **20.07.2011**
(21) Application number: 11150887.5
(22) Date of filing: 13.01.2011
(51) Int. Cl.: F02N 99/00, F02N 11/08

(54) **Controller for idle stop system**

(30) Priority: 14.01.2010 JP 2010005417
(71) Applicant: Hitachi Automotive Systems, Ltd., Hitachinaka-shi Ibaraki 312-8503 (JP)
(72) Inventor: Mukaihara, Osamu, Ibaraki 312-8503 (JP); Machida, Kenichi, Ibaraki 312-8503 (JP)
(74) Representative: MERH-IP Matias Erny Reichl Hoffmann

(57) **Abstract**

When a request for re-start of an engine or a request for start occurs during inertial revolution of the engine by fuel cut at the time of request for idle stop, an operation of starting by re-start of fuel injection and an operation of driving the starter overlap, and a problem is likely to occur in wear resistance and durability of a ring gear 106 and a pinion gear 101e. Further, since collision torque becomes large, a collision sound of the ring gear 106 and the pinion gear 101e and a mesh sound which occurs at the instant of connection are likely to occur. The present invention changes a method of starter drive based on a behavior of engine revolution after a request for re-start of the engine or a request for start occurs during inertial revolution of the engine by fuel cut at the time of request for idle stop, and combustion recovery is implemented by an engine combustion recovery function 103d, or an engine state or the like at the time of occurrence of change of mind, in a controller 103 of a vehicle having an idle stop function.

## Description

### BACKGROUND OF THE INVENTION

### Field of the Invention

The present invention relates to a controller which automatically stops and re-starts an engine.

### Background Art

Automatic stop of idling (idle stop) by cutting off the fuel to be supplied to an engine when predetermined conditions for allowing temporary stop of the engine are established during operation of an automobile is conceived of for the purpose of saving energy resources and environmental conservation, and the idle stop is already carried out in some automobiles.

When in the automobile compliant with idle stop, the request for re-start of the engine (a request for re-start of the engine or a request for change of mind) occurs during an engine inertia revolution period after the fuel to be supplied to the engine is cut off by the request for idle stop which occurs when the aforementioned predetermined conditions are established until the crankshaft of the engine stops revolution, re-starting the engine as quickly as possible is requested.

As the art of satisfying the request, there is the method which re-starts combustion of the engine and re-starts the engine by supplying the fuel, which is cut off, to the engine again when the request for re-start of the engine occurs during the engine inertia revolution period immediately after occurrence of the request for idle stop. However, in the re-start of the engine by combustion, combustion cannot be favorably performed depending on the engine state (for example, an air charge rate or the like at the point of time when the request for re-start of the engine occurs during the engine inertia revolution period), and re-start of the engine sometimes becomes difficult.

Thus, there is proposed the art of re-starting the engine by driving a starter by energizing the starter motor with speed governing when the request for re-start of the engine occurs during an engine inertia revolving period, and causing the pinion to mesh with the ring gear at the point of time when the revolution speed of the pinion included coaxially with the starter motor is synchronized with the revolution speed of the ring gear included in the engine (Japanese Patent No. 4214401).

### SUMMARY OF THE INVENTION

When combustion is not favorably performed though the re-start of the engine by combustion is implemented, the behavior of engine revolution reduces to the region requiring the assist by the starter, the control of re-starting the engine by driving the starter is implemented, and the operations of re-starting the engine by combustion and re-starting the engine by driving the starter overlap. In this case, in the state in which the angular acceleration direction of the engine revolution and the angular velocity direction of the pinion revolution differ from each other, the pinion gear collides with the ring gear at the engine side, and the collision torque becomes large, whereby there arise the problems of wear of the ring gear and the pinion gear at the time of connection, and reduction in durability. Further, since the collision torque becomes large, there arises the problem that a collision sound of the ring gear and the pinion gear, and a mesh sound which occurs at the instant of connection become large.

In order to solve the above described problems, the present invention is characterized by changing a method of starter drive based on a behavior of engine revolution after combustion recovery is implemented by an engine combustion recovery function, an engine state at a time of occurrence of change of mind, or the like, in a controller of a vehicle having an idle stop function when a request for change of mind occurs.

According to the present invention, in the configuration which performs idle stop, the engine can be smoothly re-started after a request for change of mind occurs. Further, durability, wear resistance, and quietness of the starter system can be improved.

### BRIEF DESCRIPTION OF THE DRAWINGS

FIG. 1 is a functional block diagram of an idle stop system.
FIG. 2 is a flowchart of one embodiment according to the present invention.
FIG. 3 is a flowchart of one embodiment according to the present invention.
FIG. 4 is a flowchart of one embodiment according to the present invention.
FIG. 5 is a flowchart of one embodiment according to the present invention.
FIG. 6 is a flowchart of one embodiment according to the present invention.
FIG. 7 is a flowchart of one embodiment according to the present invention.
FIG. 8 is a flowchart of one embodiment according to the present invention.
FIG. 9 is flowchart 1 of one embodiment according to the present invention.
FIG. 10 is flowchart 2 of one embodiment according to the present invention.
FIG. 11 is timing chart 1 of a starter operation of one embodiment according to the present invention.
FIG. 12 is timing chart 2 of a starter operation of one embodiment according to the present invention.
FIG. 13 is timing chart 3 of a starter operation of one embodiment according to the present invention.
FIG. 14 is timing chart 4 of a starter operation of one embodiment according to the present invention.
FIG. 15 is timing chart 5 of a starter operation of one embodiment according to the present invention.
FIG. 16 is timing chart 6 of a starter operation of one embodiment according to the present invention.

### DETAILED DESCRIPTION OF THE PREFERRED EMBODIMENTS

Hereinafter, embodiments of the present invention will be described.

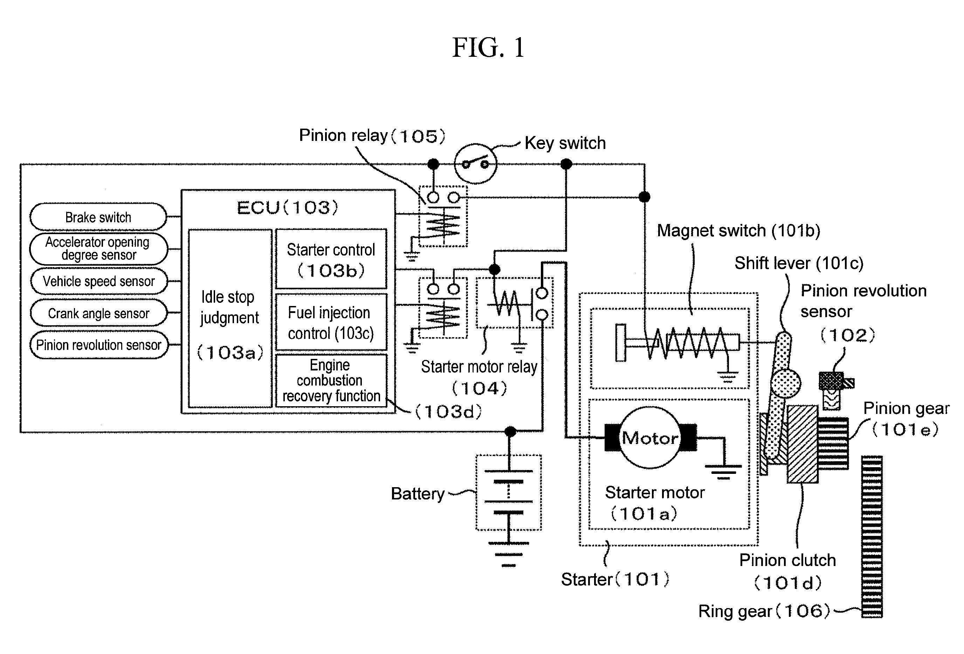

FIG. 1 is a functional block diagram of an idle stop system.

A starter main body 101 is configured by a starter motor 101a, a magnet switch 101b, a shift lever 101c, a pinion clutch 101d, a pinion gear 101e and the like. The starter motor 101a and the magnet switch 101b are driven by controlling power supply relays (of a starter motor relay 104 or a pinion relay 105) which are independent from each other, based on output from an ECU 103 (Engine Control Unit). The starter motor 101a and the pinion gear 101e are coaxially connected, and when the starter motor 101a rotates, the pinion gear 101e also rotates. When the magnet switch 101b is energized, the shift lever 101c is pushed out, and the pinion gear 101e is connected to a ring gear 106 which is included by an engine. The ring gear 106 rotates synchronously with a crankshaft of the engine which is not illustrated. Further, the ECU 103 implements idle stop permission determination in an idle stop permission judgment block 103a from the information (the signals or the values) of various kinds of sensors such as a brake SW and a vehicle speed sensor, in addition to the ordinary information (the signals or the values) of fuel injection, ignition, intake air amount control (electronic control throttle and the like) which are not illustrated. In accordance with the idle stop permission judgment result, fuel cut control is performed in a fuel injection control block 103c. When a start request is made, a so-called request of change of mind is made before the crankshaft of the engine stops after the idle stop permission judgment is performed, various kinds of controls for combustion recovery including re-start of fuel injection are implemented by an engine combustion recovery function 103d. Further, in a starter control block 103b, control of a starter motor relay 104 and a pinion relay 105 is implemented. The combustion recovery function 103d controls at least a fuel amount to be supplied to the engine, a fuel supply timing and an ignition timing to recover the combustion.

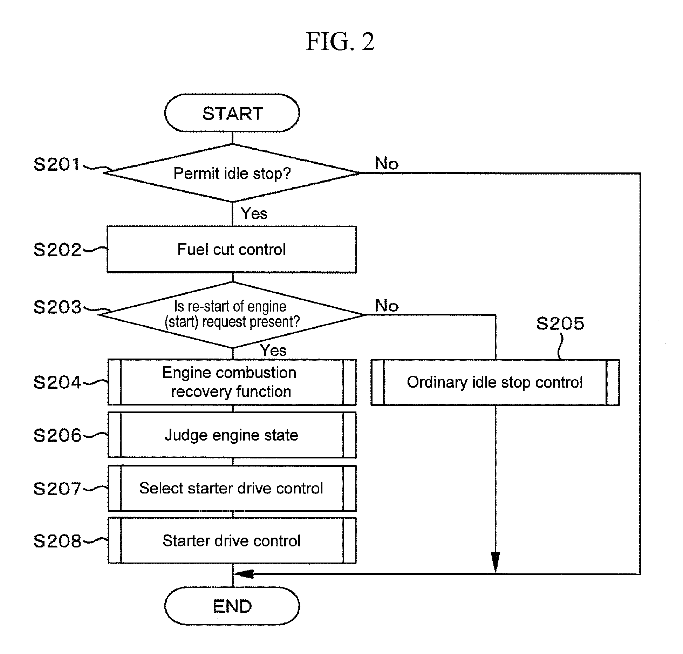

FIG. 2 is one embodiment according to the present invention. The control is implemented at constant intervals (for example, every 10 ms).

In S201, a possibility judgment of implementation of idle stop is performed from the information of various sensors and the like illustrated in FIG. 1. When the idle stop permission judgment is established, the flow proceeds to S202, whereas when it is not established, the flow ends. In S202, in order to stop the engine, fuel cut control for cutting off the fuel to be supplied to the engine is implemented. When the fuel cut control is implemented, the crankshaft of the engine is brought into the state of inertia revolution, becomes gradually slow in the revolution speed due to the influence of the resistance of friction and the like, and finally stops. In S203, it is judged whether or not a request for re-start of the engine (request for change of mind) occurs during the inertia revolution of the engine (the crankshaft). In more detail, in the ECU 103, idle stop permission judgment is implemented from the information of various sensors such as the brake SW and the vehicle speed sensor in the idle stop permission judgment block 103a, whereby presence or absence of a request for the re-start of the engine during inertia revolution is judged. In the case of presence of the request for re-start of the engine, the flow proceeds to S204. When the condition is not established, the flow proceeds to S205, and the conventional idle stop control is implemented. Though not illustrated, when the engine stops before occurrence of the request for re-start of the engine, the flow proceeds to S205, and the conventional idle stop control is implemented. In S204, various kinds of controls for combustion recovery including re-start of fuel injection are implemented by the engine combustion recovery function. In S206, the engine state after the controls by the combustion recovery function is implemented is judged. In S207, from the judgment result of S206, selection of starter drive control is performed, and the selected starter drive control is implemented in S208.

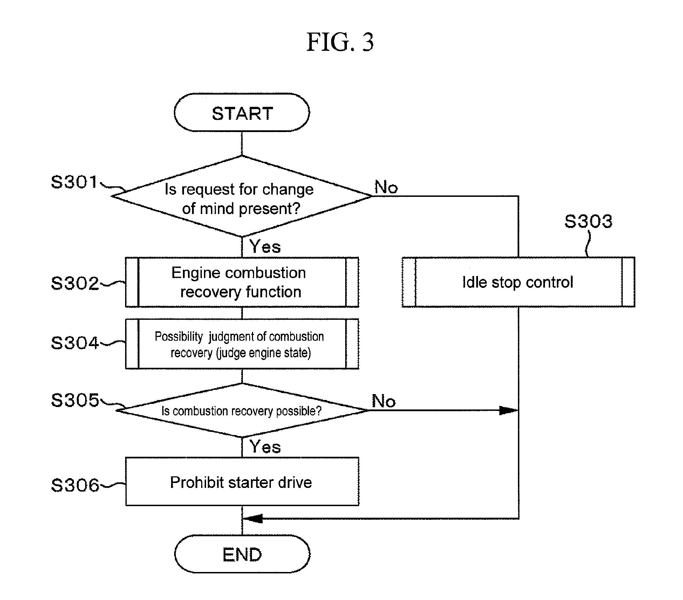

FIG. 3 is a flowchart of one embodiment according to the present invention. The present flow is implemented at constant intervals (for example, every 10 ms).

In S301, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during the inertia revolution of the engine (S203). When the request for change of mind occurs, the flow proceeds to S302, and when the condition is not established, the flow proceeds to S303, and the conventional idle stop control is implemented. Though not illustrated, when the engine stops before occurrence of the request for change of mind, the flow also proceeds to S205, and the conventional idle stop control is implemented. In S302, the control by the engine combustion recovery function is implemented, and in S304, in order to grasp the engine state, a possibility judgment of combustion recovery is performed (the description is omitted here since the details will be described later). In S305, it is judged whether the combustion recovery is possible or difficult by the result of the possibility judgment of combustion recovery. When the combustion recovery is possible, the flow proceeds to S306, and starter drive from that time on is prohibited, whereas when the condition is not established, the flow directly ends.

According to the present embodiment, in the case of presence of the request for change of mind, if the engine can be re-started by the combustion recovery function, the pinion gear is not caused to be connected to the ring gear by prohibiting starter drive, and useless collision of the ring gear and the pinion gear is avoided. Thereby, a collision sound and a mesh sound of the ring gear and the pinion gear do not occur, and wear of the ring gear and the pinion gear can be lessened.

Further, the following problem can be solved according to the present embodiment. More specifically, even if fuel supply is re-started, and re-start of the engine by combustion is implemented, the engine speed does not immediately increases, and it is necessary to wait for a certain time to elapse. This is because when a port fuel injection (PFI) engine injecting a fuel into the intake port is taken as an example, a time is required from the intake stroke in which fuel injection is performed to the expansion stroke in which the combustion torque can be obtained in the cylinder that performs fuel injection first from re-start of fuel supply. There is naturally the problem that during this time period, reduction in the engine revolution is unavoidable. The same problem also exists in a direct-injection type engine.

Under such a problem, even if combustion recovery is possible, if the region enters in the region where driving of the starter is performed because the engine speed reduces in the initial stage of combustion recovery, noise and wear which are originally unnecessary are likely to occur by driving the starter. Thus, by application of the present embodiment, the aforementioned problems can be solved by performing the possibility judgment of combustion recovery by allowing for reduction in the engine speed at the initial stage of combustion recovery by judging whether it is possible or difficult (or impossible) that the control of combustion recovery is implemented.

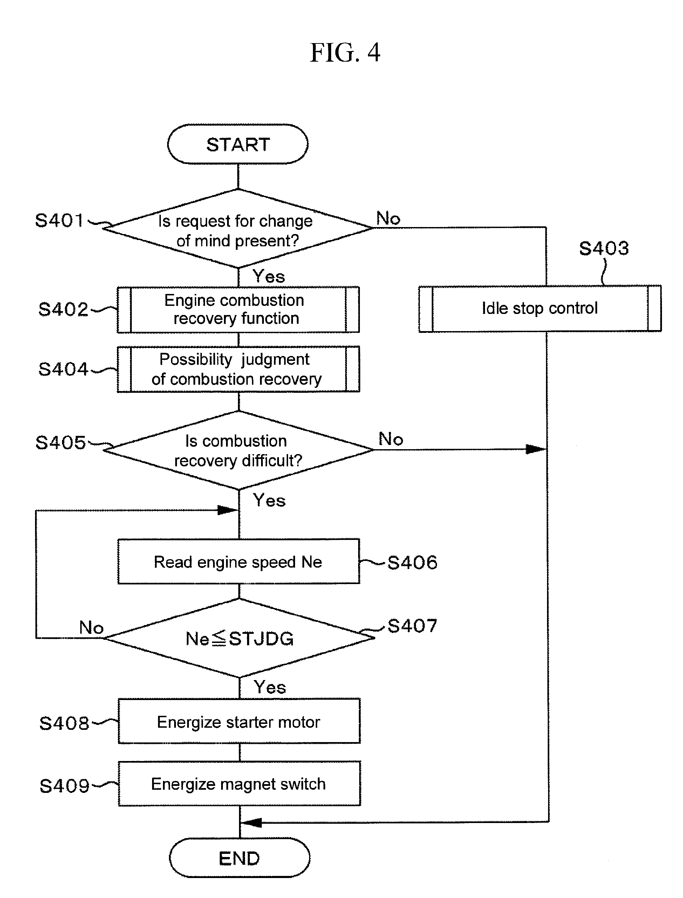

FIG. 4 is a flowchart of one embodiment according to the present invention. The present flow is implemented at constant intervals (for example, 10 ms).

In S401, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during inertia revolution of the engine (S203). When the request for change of mind occurs, the flow proceeds to S402, and when the condition is not established, the conventional idle stop control is implemented in S403. In S402, the engine combustion recovery function is implemented, and in S404, in order to grasp the engine state, the possibility judgment of combustion recovery is performed (the description is omitted here since the details will be described later). In S405, it is judged whether or not the result of the possibility judgment of combustion recovery is difficult for combustion recovery. When the combustion recovery is difficult (or impossible), the flow proceeds to S406, whereas when the condition is not established, the flow directly ends. In S406, an engine speed Ne after implementation of the engine combustion recovery function is read, and in S407, the engine speed Ne read in S406 and a starter drive permission revolution speed STJDG are compared. When the engine speed Ne is less than the starter drive permission speed STJDG, the flow proceeds to S408, and when the condition is not established, the flow returns to S406, and the engine speed Ne is updated until the condition of S407 is established. In S408, the starter motor is energized, and thereby, the pinion gear is rotated. In S409, the magnet switch is energized, whereby the pinion gear is connected to the ring gear included by the engine, and re-start of the engine by starter drive can be performed. According to the present invention, re-start of the engine by starter drive is implemented when re-start of the engine by combustion (combustion recovery) is difficult. Therefore, re-start of the engine can be performed without engine stop, the re-start times can become shorter than ever before, and smooth re-start of the engine can be performed. In the present flowchart, the energizing timing of the starter motor (S408) and the energizing timing of the magnet switch (S409) are described by using the method which compares the engine speed Ne and the starter drive permission speed STJDG after implementation of the engine combustion recovery function, but the method does not have to be limited to this method, and, for example, the method which energizes the starter motor and the magnet switch after a lapse of a predetermined time, or the like may be used.

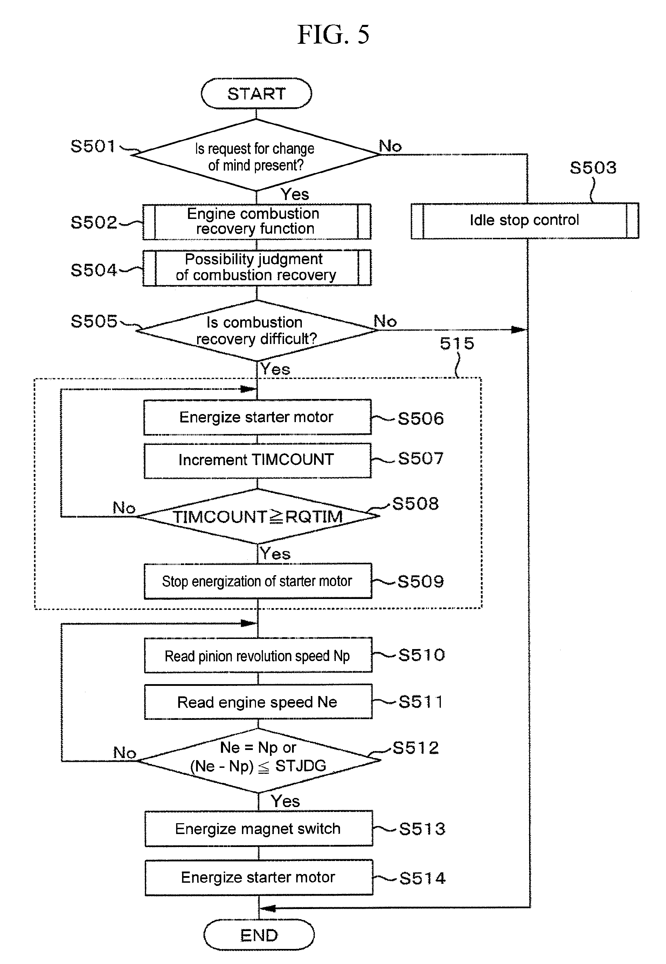

FIG. 5 is a flowchart of one embodiment according to the present invention. The present flow is implemented at constant intervals (for example, 10 ms).

In S501, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during inertia revolution of the engine (S203). When the request for change of mind occurs, the flow proceeds to S502, and when the condition is not established, the conventional idle stop control is implemented in S503. In S502, the engine combustion recovery function is implemented, and in S504, in order to grasp the engine state, the possibility judgment of combustion recovery is performed (the description is omitted since the details will be described later). In S505, it is judged whether or not the result of the possibility judgment of combustion recovery is difficult for combustion recovery. When the combustion recovery is difficult (or impossible), the flow proceeds to S506, whereas when the condition is not established, the flow directly ends. In S506, by energizing the starter motor, the pinion gear included coaxially with the starter motor is rotated. In S507, a starter motor energizing time TIMCOUNT is incremented at constant intervals (not especially specified, but every 10 ms is assumed here). In S508, it is judged whether the energizing time TIMCOUNT of the starter motor is not less than a requested energizing time RQTIM which is set in advance or calculated by predetermined calculation. When the condition is established, the flow proceeds to S509, whereas when the condition of S508 is not established, the flow returns to S506, where energization of the starter motor is continued until the condition of S508 is established. In S509, the energization of the starter motor is stopped, whereby the pinion gear is in the state of inertia revolution, and the pinion revolution speed is gradually reduced. In S510, a pinion revolution speed Np during inertia revolution is read, and in S511, the engine speed Ne is read. In S512, it is judged whether the pinion revolution speed Np and the engine speed Ne correspond to each other, or a difference of the pinion revolution speed Np and the engine speed Ne is not more than the starter drive permission speed STJDG. When the condition is established, the flow proceeds to S513, and when the condition is not established, the flow returns to S510, and the pinion revolution speed Np and the engine speed Ne are updated until the condition of S511 is established. In S513, the magnet switch is energized to connect the pinion gear and the ring gear, and in S514, the starter motor is energized, and re-start of the engine by starter drive is performed. According to the present invention, the pinion gear and the ring gear are connected in the state in which the difference between the engine speed and the pinion revolution speed is small, whereby re-start of the engine can be performed, the collision torque at the time of connecting the pinion gear and the ring gear is lessened, the collision sound and the mesh sound are reduced, and wear of the ring gear and the pinion gear can be lessened. In the present flowchart, before the pinion gear and the ring gear are connected, the step of energizing the starter motor for a predetermined time period is present for the purpose of synchronizing the behavior of pinion revolution and the behavior of engine revolution (inside the broken line of 515 in the drawing), but the step in 515 does not always have to be performed in this timing, and the step in 515 may be implemented before the step of S501, for example.

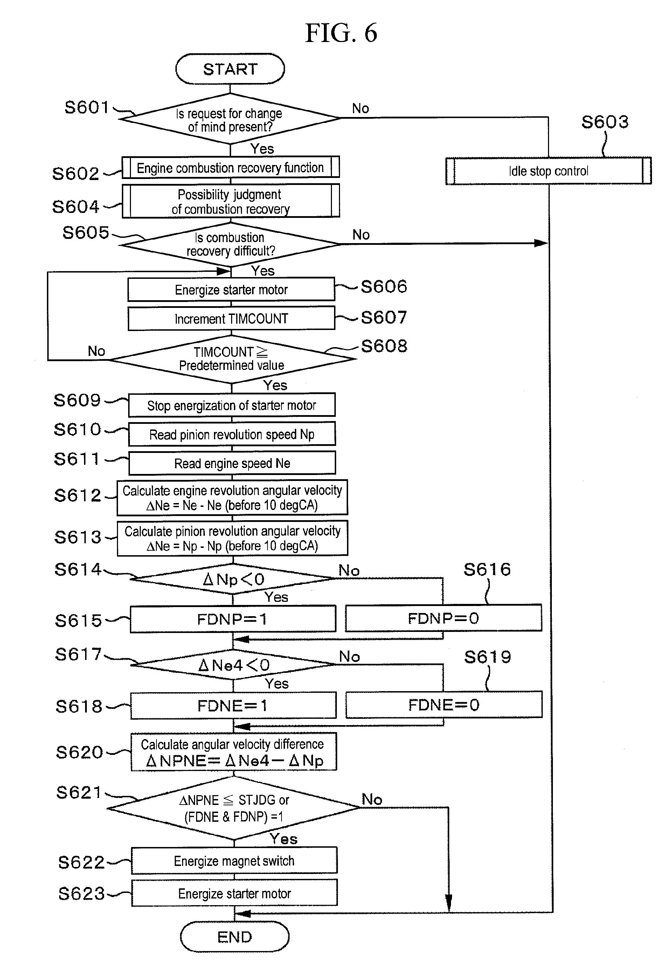

FIG. 6 is a flowchart of one embodiment according to the present invention. The present flow is implemented at constant intervals (for example, 10 ms).

In S601, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during inertia revolution of the engine (S203). When the request for change of mind occurs, the flow proceeds to S602, and when the condition is not established, the conventional idle stop control is implemented in S603. In S602, the engine combustion recovery function is implemented, and in S604, in order to grasp the engine state, the possibility judgment of combustion recovery is performed (the description is omitted since the details will be described later). In S605, it is judged whether or not the result of the possibility judgment of combustion recovery is difficult for combustion recovery. When the combustion recovery is difficult, the flow proceeds to S606, whereas when the condition is not established, the flow directly ends. In S606, by energizing the starter motor, the pinion gear included coaxially with the starter motor is rotated. In S607, a starter motor energizing time TIMCOUNT is incremented at constant intervals (not especially specified, but every 10 ms is assumed here). In S608, it is judged whether the energizing time TIMCOUNT of the starter motor is not less than a requested energizing time RQTIM which is set in advance or calculated by predetermined calculation. When the condition is established, the flow proceeds to S609, whereas when the condition of S608 is not established, the flow returns to S606, where energization of the starter motor is continued until the condition of S608 is established. In S609, the energization of the starter motor is stopped, whereby the pinion gear is in the state of inertia revolution, and the pinion revolution speed is gradually reduced. Thereafter, the flow proceeds to S610, the pinion revolution speed Np during inertia revolution is read, and in S611, the engine speed Ne is read. In S612, an engine revolution angular acceleration ΔNe is calculated. In this case, the angular acceleration is calculated simply by using the difference between the engine speed Ne before 10 degCA and the present engine speed Ne. In S613, a pinion revolution angular acceleration ΔNp is calculated. In this calculation method, calculation is simply made as in S612. Thereafter, in S614, a pinion angular acceleration direction is judged. If ΔNp is smaller than zero, the flow proceeds to S615, where it is determined as negative angular acceleration judgment, and a pinion acceleration direction judgment flag FDNP is set as one. Further, if ΔNp is larger than zero, the flow proceeds to S616, where it is judged as a positive acceleration, and the pinion acceleration direction judgment flag FDNP is set as zero. In S617, an engine angular acceleration direction is judged. If ΔNe is smaller than zero, the flow proceeds to S618, where it is judged as negative acceleration judgment, and an engine acceleration direction judgment flag FDNE is set as one. Further, if ΔNe is larger than zero, the flow proceeds to S619, where it is judged as a positive acceleration, and the engine acceleration direction judgment flag FDNE is set as zero. In S620, an angular velocity difference ΔNPNE between the engine revolution angular acceleration ΔNe and the pinion revolution angular acceleration ΔNp is calculated. In S621, AND of the engine angular acceleration direction flag and the pinion angular acceleration direction flap is taken and when AND is one, or when the difference ΔNPNE between the engine revolution angular acceleration ΔNe and the pinion revolution angular acceleration ΔNp is not more than the starter drive permission revolution speed STJDG, the flow proceeds to S622, and when the condition is not established, the flow directly ends. In S622, the magnet switch is turned on to connect the pinion gear to the ring gear. In S623, the starter motor is turned on, and the starter motor is rotated, whereby the ring gear connected to the pinion gear is also rotated, and therefore, the engine can be re-started. The purpose of confirming whether the engine and the pinion gear are in the same angular acceleration direction in S621 will be described. Since the engine repeats intake, compression, expansion and discharge, the engine has the characteristic that the angular acceleration direction changes in accordance with the crank timing due to the charge air amount in the cylinder even during inertia revolution after fuel cut, and therefore, it is judged whether the engine angular acceleration direction and the pinion angular acceleration direction correspond to each other. According to the present invention, when the directions of the engine angular acceleration and the pinion angular acceleration are the same, or when the difference between the engine angular acceleration and the pinion angular acceleration is not more than a predetermined value, the pinion gear and the ring gear are connected, and re-start of the engine can be performed. Thus, the collision torque when the pinion gear and the ring gear are connected is lessened, the collision sound and the mesh sound are reduced, and wear of the ring gear and the pinion gear can be lessened. In the present flowchart, from S606 to S609, the step is present, which energizes the starter motor for a predetermined time period for the purpose of synchronizing the behavior of the pinion revolution and the behavior of the engine revolution, but the step does not always have to be performed in the timing of the drawing, and may be implemented before the step of S601, for example.

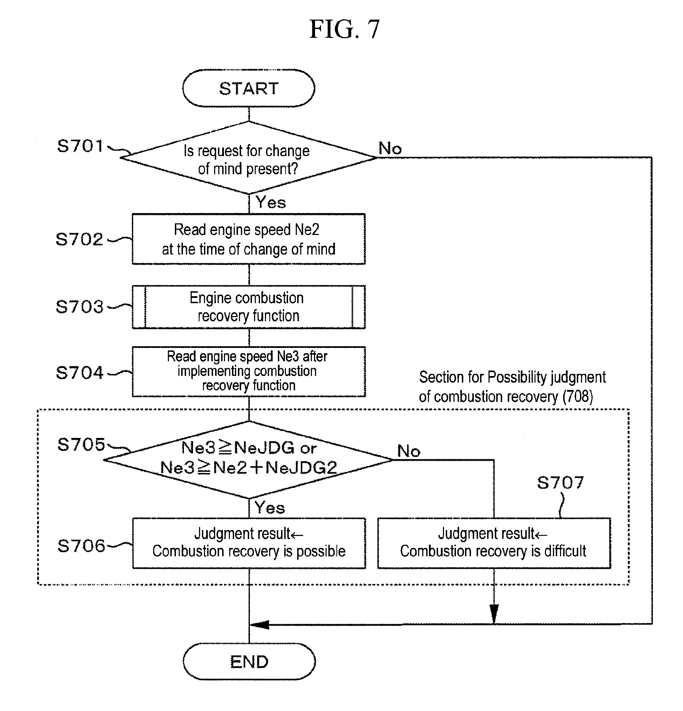

FIG. 7 is a flowchart of one embodiment according to the present invention. The present flow is implemented at constant intervals (for example, 10 ms).

In S701, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during inertia revolution of the engine (S203). When the request for change of mind occurs, the flow proceeds to S702, and when the condition is not established, the conventional idle stop control is implemented and the flow ends though not illustrated. In S702, an engine speed Ne2 at the time of occurrence of change of mind is read, and the engine combustion recovery function is implemented in S703. Thereafter, in S704, an engine speed Ne3 after the engine combustion recovery function is implemented is read (the read timing of the engine speed Ne3 is assumed to be the timing when the crank angle of the cylinder which re-starts fuel combustion first is in the expansion stroke and thereafter). In S705, the possibility judgment of combustion recovery is performed, and in this case, when the engine speed Ne3 after the engine combustion recovery function is implemented is not less than a combustion recovery judgment reference value NeJDG, or when the engine speed Ne3 after the engine combustion recovery function is implemented increases to a second combustion recovery judgment reference value NeJDG2 or more from the engine speed Ne2 at the time of occurrence of the change of mind, the flow proceeds to S706, where the judgment result is judged as possible for combustion recovery. When the condition of S705 is not established, the flow proceeds to S707, where the judgment result is difficult for combustion recovery. The steps from S705 through S707 correspond to a possibility judgment of combustion recovery section (708). According to the present invention, the possibility judgment of combustion recovery can be performed based on the engine speed after the engine combustion recovery function is implemented.

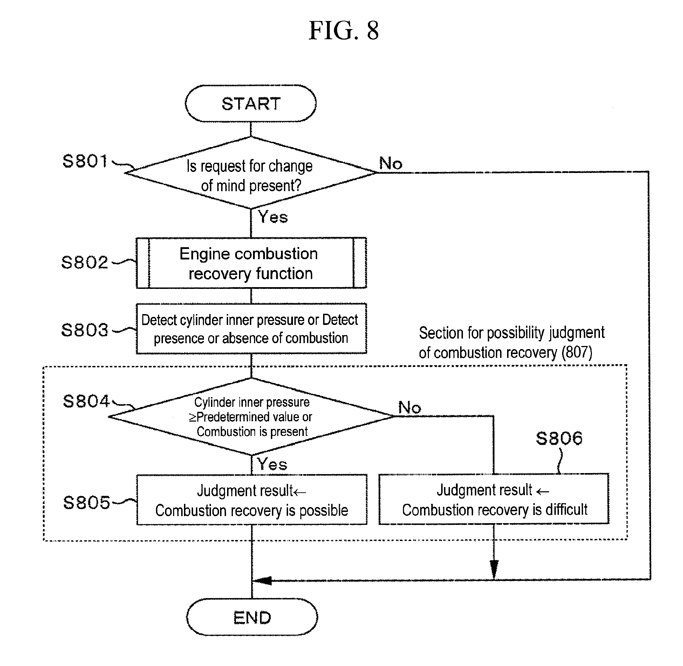

FIG. 8 is a flowchart of one embodiment according to the present invention. The present flow is implemented at constant intervals (for example, 10 ms).

In S801, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during inertia revolution of the engine (S203). When the request for change of mind occurs, the flow proceeds to S802, and when the condition is not established, the conventional idle stop control is implemented and the flow ends though not illustrated. In S802, the engine combustion recovery function is implemented, and in S803, the engine state after the engine combustion recovery function is implemented is grasped. The present invention includes the aforesaid cylinder inner pressure detection means or combustion generation detection means in the cylinder. As the concrete detection means, the cylinder inner pressure (the pressure in a cylinder) as the operation state can be detected by using a cylinder inner pressure sensor, and as to presence or absence of combustion occurrence, the ion current which occurs at the time of combustion can be detected by an ion current detection sensor. Further, the cylinder in which the presence or absence of occurrence of combustion as the operation state is detected is assumed to be the cylinder in which fuel injection is performed first by the engine combustion recovery function. In S804, based on the information detected in S803, the possibility judgment of combustion recovery is performed. When the pressure in the cylinder is not less than a predetermined pressure, or when combustion occurs, the flow proceeds to S805, and when the condition is not established, the flow proceeds to S806. In S805, the judgment result is judged that combustion is possible, and in S806, the judgment result is judged as difficult for combustion recovery. According to the present invention, the possibility judgment of combustion recovery can be made based on the pressure in the cylinder after fuel injection is re-started, or presence or absence of occurrence of combustion.

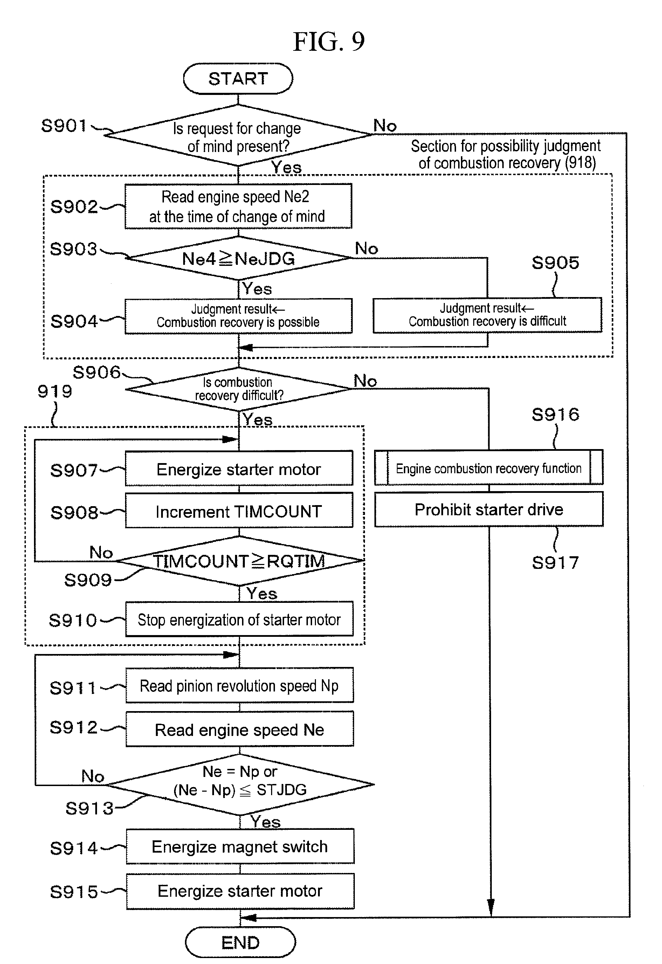

FIG. 9 is a flowchart of one embodiment according to the present invention. The present flow is implemented at constant intervals (for example, 10 ms).

The vehicle controllers in the embodiments described above have the characteristic of changing the starter drive control in accordance with the engine state after the engine combustion recovery function is implemented, but the vehicle controller of the present embodiment has the characteristic of performing the possibility judgment of combustion recovery based on the engine speed at the time point when the request for change of mind occurs, or the deceleration (negative acceleration) of the engine as the operation state until the request for change of mind occurs. First, an embodiment based on the engine speed at the time point when the request for change of mind occurs will be described. In S901, presence or absence of the request for change of mind is judged, and this indicates equivalence to implementing fuel cut control (S202) after the idle stop permission judgment in FIG. 2 is established (S201) and performing judgment of whether or not the request for the re-start of the engine (or for the start of the vehicle) occurs during inertia revolution of the engine (S203). When the request for change of mind occurs, the flow proceeds to S902, and when the condition is not established, the conventional idle stop control is implemented, and flow ends though not illustrated. In S902, the engine speed Ne2 at the time point when the request for change of mind occurs is read, and in S903, the engine speed Ne2 at the time point when the request for change of mind occurs and the combustion recovery judgment reference value NeJDG are compared. As the combustion recovery judgment reference value NeJDG, a predetermined value may be set in the ECU (103 in FIG. 1) in advance, or the combustion recovery judgment reference value NeJDG may be calculated from predetermined calculation, and in this case, it is assumed that the request of change of mind occurs, and the lowest engine speed at which re-start of the engine can be performed by re-starting fuel injection when the request for change of mind occurs is determined by adaptation, and is set in advance. When the engine speed Ne2 at the time point when the request for change of mind occurs is not less than the combustion recovery judgment reference value NeJDG, the flow proceeds to S904, and the judgment result is that combustion recovery is possible. When the condition is not established, the flow proceeds to S905, and the determination result is that combustion recovery is difficult (or impossible). Thereafter, in S906, judgment of whether or not the result of the possibility judgment of combustion recovery is that combustion recovery is difficult is performed. When the condition is established, the flow proceeds to S907, whereas when the condition is not established, the flow proceeds to S916, where the engine combustion recovery function is implemented, and in S917, starter drive is prohibited. In S907, the starter motor is energized, and thereby, the pinion gear included coaxially with the starter motor is rotated. In S908, the starter motor energizing time TIMCOUNT is incremented at constant intervals (in this case, every 10 ms is assumed though not especially specified), and in S909, it is determined whether the energizing time TIMCOUNT of the starter motor is not less than the required energizing time RQTIM which is set in advance or calculated by predetermined calculation. When the condition is established, the flow proceeds to S910, and when the condition of S909 is not established, the flow returns to S907, and energization of the starter motor is continued until the condition of S909 is established. In S910, by stopping energization of the starter motor, the pinion gear is brought into the state of inertia revolution, and the pinion revolution speed gradually reduces. In S911, the pinion revolution speed Np is read, and in S912, the engine speed Ne is read. In S913, it is judged whether or not the pinion revolution speed Np and the engine speed Ne correspond to each other, or whether or not the difference between the pinion revolution speed Np and the engine speed Ne is not more than the starter drive permission revolution speed STJDG. When the condition is established, the flow proceeds to S914, and when the condition is not established, the flow returns to S911, and update of the pinion revolution speed Np and the engine speed Ne is performed until the condition of S913 is established. In S914, the magnet switch is energized to connect the pinion gear to the ring gear. In S915, the starter motor is rotated by energizing the starter motor, whereby the ring gear connected to the pinion gear is rotated, and therefore, the engine can be re-started. According to the present invention, in the case of occurrence of the request for change of mind, when the re-start of the engine by the combustion recovery function can be performed, starter drive is prohibited, so that the pinion gear is not connected to the ring gear, and needless collision of the ring gear and the pinion gear is avoided. Thereby, a collision sound and a mesh sound of the ring gear and the pinion gear do not occur, and wear of the ring gear and the pinion gear can be lessened. Further, when combustion recovery is difficult in the case of occurrence of the request for change of mind, the pinion gear and the ring gear are connected in the state in which the difference of the engine speed and the pinion revolution speed is small, and re-start of the engine can be performed, the collision torque when the pinion gear and the ring gear are connected is lessened, a collision sound and a mesh sound are reduced, and wear of the ring gear and the pinion gear can be lessened. In the present flowchart, the step of energizing the starter motor for a predetermined time period is present (inside the broken line of 919 in the drawing) for the purpose of synchronizing the behavior of pinion revolution and the behavior of engine revolution, before the pinion gear and the ring gear are connected, but the step in the 919 does not always have to be performed at this timing, and the step in 919 may be implemented before the step of S901, for example. Further, the starter drive method of the present invention is not limited to this.

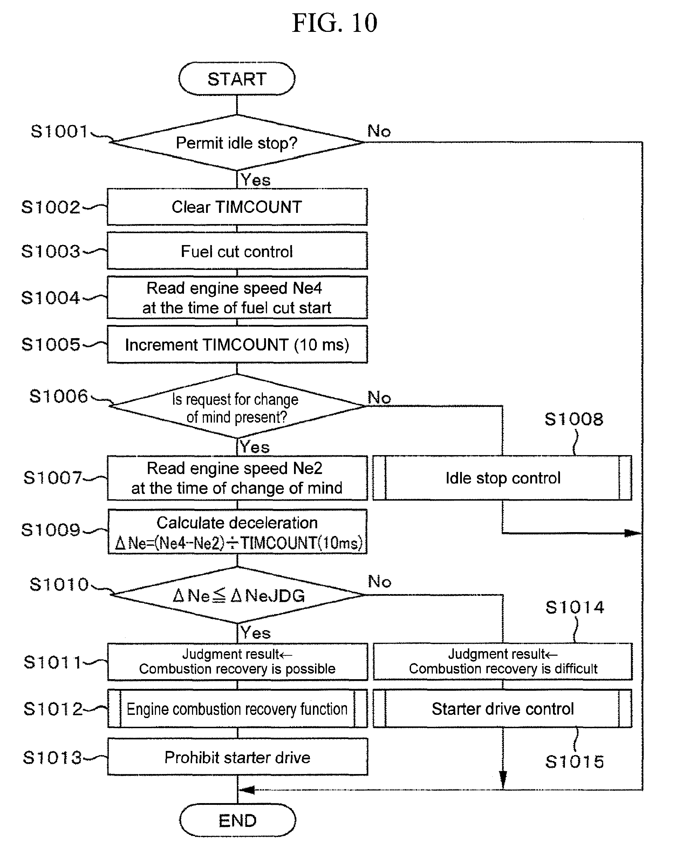

FIG. 10 is a flowchart of one embodiment according to the present invention. The present flow is implemented at constant intervals (for example, 10 ms).

In FIG. 9, the embodiment using the method based on the engine speed at the time point when the request for change of mind occurs is described, and in FIG. 10, a vehicle controller based on an engine deceleration until the request for change of mind occurs will be described.

In S1001, permitting judgment of implementation of idle stop is performed from the information of various sensors and the like described in FIG. 1. When the idle stop permission judgment is established, the flow proceeds to S1002, whereas when it is not established, the flow ends. In S1002, the timer counter TIMCOUNT is cleared, and this is implemented at only the time point when the idle stop permission judgment is established from non-establishment. Thereafter, in S1003, fuel cut control is implemented, and in S1004, an engine speed Ne4 at the time of fuel cut start is read. In S1005, the timer counter TIMCOUNT is incremented at constant intervals (in this case, every 10 ms is assumed). Next, the flow proceeds to S1006, and it is judged whether or not the request for change of mind occurs. When the request for change of mind occurs, the flow proceeds to S1007. When the condition is not established, the flow proceeds to S1008, and the conventional idle stop control is implemented. In S1007, the engine speed Ne2 at the time of occurrence of change of mind is read, and in S1009, a deceleration ΔNe of engine revolution is calculated. Here, the difference between the engine speed Ne4 at the time of start of fuel cut and the engine speed Ne2 at the time point when change of mind occurs is divided by the timer counter TIMCOUNT, and thereby, the inclination of the deceleration is obtained. However, as to the calculation method, a different method may be used. In S1010, the possibility judgment of combustion recovery using the deceleration ΔNe of engine revolution is performed. When the deceleration ΔNe of the engine revolution is not more than the combustion recovery judgment reference value ΔNeJDG, the flow proceeds to S1011, and the judgment result is that combustion recovery is possible. In S1012, the engine recovery function is implemented, and starter drive is prohibited in S1013. When the condition of S1010 is not established, the flow proceeds to S1014, where the judgment result is that combustion recovery is difficult, and in S1015, starter drive control is implemented. The details of starter drive control are already described, and therefore, the description will be omitted. Further, as for the combustion recovery judgment reference value ΔNeJDG in S1010, a predetermined value may be set at the ECU (103 in Fig. 1) in advance, or the combustion recovery judgment reference value ΔNeJDG may be calculated from predetermined calculation, but in this case, it is assumed that the deceleration of the steepest inclination with which the engine can be re-started by re-starting fuel injection when a request of change of mind occurs is determined by adaptation and is set in advance. According to the present invention, the possibility judgment of combustion recovery can be performed based on the engine deceleration until a request for change of mind occurs (in detail, when the deceleration when the engine performs inertial revolution by fuel cut has a steep inclination, combustion recovery is judged as difficult, whereas when the deceleration has a gentle inclination, combustion recovery can be judged as possible).

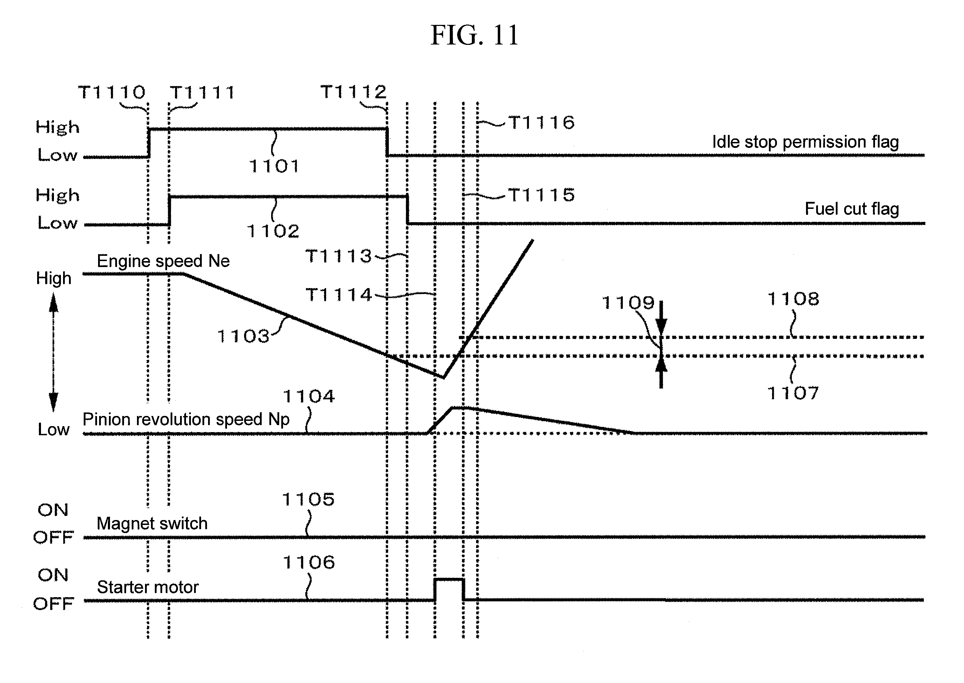

FIG. 11 and the following drawings schematically illustrate the operation of the present embodiment.

FIG. 11 is a timing chart using a vehicle controller according to the present embodiment. Reference numeral 1101 designates an idle stop permission condition flag, which becomes high when permitting judgment of implementation of idle stop is performed from the information of various sensors illustrated in FIG. 1, and idle stop is permitted, and becomes low when idle stop is prohibited. Reference numeral 1102 designates a fuel cut flag, which becomes high during implementation of fuel cut, and becomes low when fuel cut is not performed. Reference numeral 1103 designates an engine speed, and reference numeral 1104 designates a pinion revolution speed. Further, reference numeral 1105 designates an energization state of the magnet switch, and reference numeral 1106 designates an energization state to the starter motor. Reference numeral 1107 designates an engine speed Ne2 at the time of change of mind, reference numeral 1108 designates a combustion recovery judgment reference value NeJDG, and reference numeral 1109 designates a second combustion recovery judgment reference value NeJDG2.

Describing the operation in time series, at first, at T1110, the idle stop permission flag (1101) becomes high, a predetermined delay time elapses, fuel cut is implemented, and the fuel cut flag (1102) becomes high (T1111). Thereby, the engine is brought into the state of inertial revolution and starts to be gradually low in speed (1103). At T1112, during inertial revolution of the engine, the idle stop permission flag (1101) becomes low due to a request for change of mind, and after a predetermined delay time elapses from T1112, control necessary for combustion recovery such as fuel injection is implemented by the engine combustion recovery function at T1113, and engine speed (1103) starts to increase. At T1114, by occurrence of a request for change of mind, control for synchronizing the behavior of the pinion revolution and the behavior of the engine revolution is implemented, and the starter motor is energized for a predetermined time period (up to T1115 in the drawing). Further, by the engine combustion recovery function, necessary control such as re-start of fuel injection is implemented, and the engine speed Ne3 is read at a time point T1116 (Timing of T1116 is omitted since it is already described.). Here, the vehicle controller of one embodiment according to the present invention judges the combustion recovery as possible when the engine speed Ne3 at the time point T1116 is not less than the combustion recovery judgment reference value NeJDG (1108), or when the engine speed Ne3 at the time point T1116 increases to the second combustion recovery judgment reference value NeJDG2 (1109) or more from the engine speed Ne2 (1107) at the time point when the request for change of mind occurs. When the condition is not established, the combustion recovery is judged as difficult. Thereby, the possibility judgment of combustion recovery can be performed based on the engine speed after the engine combustion recovery function is implemented.

In the present drawing, the engine speed Ne3 at the time point T1116 is not less than the combustion recovery judgment reference value NeJDG (1108), or the engine speed Ne3 at the time point T1116 increases to the second combustion recovery judgment reference value NeJDG2 (1109) or more from the engine speed Ne2 (1107) at the time point when the request for change of mind occurs, and therefore, the result of the possibility judgment of combustion recovery is the judgment that combustion recovery is possible. Consequently, according to one embodiment according to the present invention, starter control (energization of the magnet switch (1105) and the starter motor (1106)) of T116 and thereafter is prohibited. The description of the present operation only shows one example in idle stop, and the vehicle operation state which achieves idle stop is not limited to this.

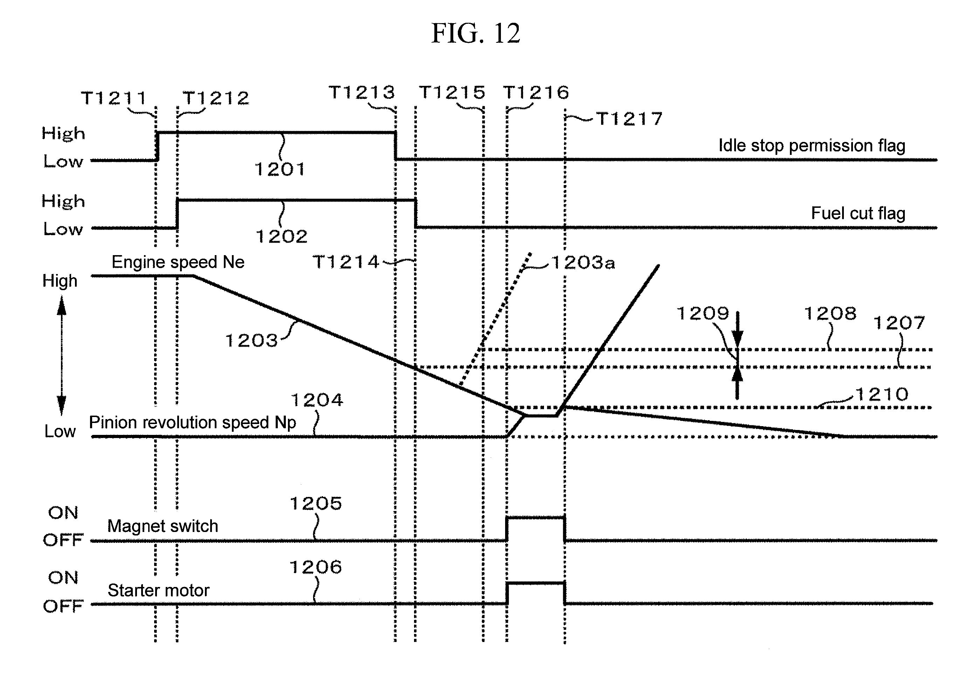

FIG. 12 is a timing chart using a vehicle controller of one embodiment in the present invention.

Reference numeral 1201 designates an idle stop permission condition flag, which becomes high when permission of implementation of idle stop is judged based on information and the like of various sensors illustrated in FIG. 1, and idle stop is permitted, and becomes low when idle stop is prohibited. Reference numeral 1202 designates a fuel cut flag, which becomes high during implementation of fuel cut, and becomes low when fuel cut is not performed. Reference numeral 1203 designates an engine speed, and reference numeral 1204 designates a pinion revolution speed. Further, reference numeral 1205 designates an energization state of the magnet switch, and reference numeral 1206 designates an energization state to the starter motor. Reference numeral 1207 designates an engine speed Ne2 at the time of change of mind, reference numeral 1208 designates a combustion recovery judgment reference value NeJDG, and reference numeral 1209 designates a second combustion recovery judgment reference value NeJDG2. Further, reference numeral 1210 designates a starter drive permission revolution speed STJDG.

Describing the operation in time series, at first, at T1211, the idle stop permission flag (1201) becomes high, a predetermined delay time elapses, fuel cut is implemented, and the fuel cut flag (1202) becomes high (T1212). Thereby, the engine is brought into the state of inertial revolution and starts to be gradually low in speed (1203). At T1213, during inertial revolution of the engine, the idle stop permission flag (1201) becomes low due to a request for change of mind, and after a predetermined delay time elapses from T1213, control necessary for combustion recovery such as fuel injection is implemented by the engine combustion recovery function at T1214, and engine speed (1203) originally increases, but in the present drawing, the engine is in the state in which favorable combustion recovery cannot be performed, and the engine speed (1203) continues to be decreased. At T1215, the engine speed Ne3 after the engine combustion recovery function is implemented is read (Timing of T1215 is omitted since it is already described.). Here, the vehicle controller of one embodiment according to the present invention performs the possibility judgment of combustion recovery based on the engine speed Ne3 at the time point T1215. In more detail, when the engine speed Ne3 at the time point T1215 is not less than the combustion recovery judgment reference value NeJDG (1208), or when the engine speed Ne3 at the time point T1215 increases to be the second combustion recovery judgment reference value NeJDG2 (1209) or more from the engine speed Ne2 (1207) at the time point when the request for change of mind occurs, combustion recovery is judged as possible, and when the condition is not established, combustion recovery is judged as difficult. Thereby, based on the engine speed after the engine combustion recovery function is implemented, the possibility judgment of combustion recovery can be performed. In the present drawing, the result of the possibility judgment of combustion recovery is that the combustion recovery is difficult, and therefore, according to one embodiment according to the present invention, at the time point (T1216) when the engine speed (1203) becomes the starter drive permission revolution speed STJDG (1210) or less, the starter motor (1206) and the magnet switch (1205) are energized, and starter drive is implemented. Thereby, the torque of the starter motor is supplied to the engine, and the engine can be re-started. At the time point (T1217) when the engine speed (1203) is increased, energization of the starter motor (1206) and the magnet switch (1205) is stopped. In the present drawing, the timing (T1216) of energizing the starter motor and the magnet switch is described by using the method of comparing the engine speed (1203) and the starter drive permission revolution speed STJDG (1208), but the method does not have to be specially limited to this method, and the method of energizing the starter motor (1206) and the magnet switch (1207) after a predetermined time elapses from the time point (T1213) when a request for change of mind occurs, the time point (T1214) when the fuel cut is started, and the like may be used. Further, the description of the present operation only shows one example in idle stop, and the vehicle operation state which achieves idle stop is not limited to this.

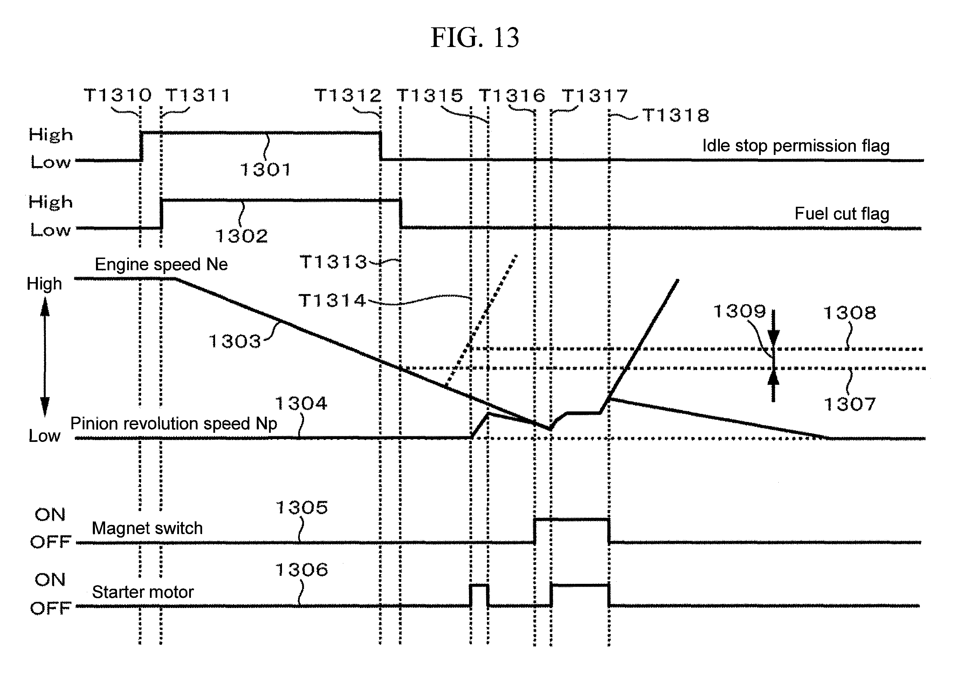

FIG. 13 is a timing chart using a vehicle controller of one embodiment in the present invention.

Reference numeral 1301 designates an idle stop permission condition flag, which becomes high when permission of implementation of idle stop is judged based on information and the like of various sensors illustrated in FIG. 1 and idle stop is permitted, and becomes low when idle stop is prohibited. Reference numeral 1302 designates a fuel cut flag, which becomes high during implementation of fuel cut, and becomes low when fuel cut is not performed. Reference numeral 1303 designates an engine speed, and reference numeral 1304 designates a pinion revolution speed. Further, reference numeral 1305 designates an energization state of the magnet switch, and reference numeral 1306 designates an energization state to the starter motor. Reference numeral 1307 designates an engine speed Ne2 at the time of change of mind, reference numeral 1308 designates a combustion recovery judgment reference value NeJDG, and reference numeral 1309 designates a second combustion recovery judgment reference value NeJDG2.

Describing the operation in time series, at first, at T1310, the idle stop permission flag (1301) becomes high, a predetermined delay time elapses, fuel cut is implemented, and the fuel cut flag (1302) becomes high (T1311). Thereby, the engine is brought into the state of inertial revolution and starts to be gradually low in speed (1303). At T1312, during inertial revolution of the engine, the idle stop permission flag (1301) becomes low due to a request for change of mind, and after a predetermined delay time elapses from T1312, control necessary for combustion recovery such as fuel injection is implemented by the engine combustion recovery function at T1313, and engine speed (1303) originally increases, but in the present drawing, the engine is in the state in which favorable combustion recovery cannot be performed, and the engine speed (1303) continues to be reduced. At T1314, the engine speed Ne3 after the engine combustion recovery function is implemented is read (Description of the timing of T1314 is omitted since it is already described.). Here, the vehicle controller of one embodiment according to the present invention performs the possibility judgment of combustion recovery based on the engine speed Ne3 at the time point T1314. In more detail, when the engine speed Ne3 at the time point T1314 is not less than the combustion recovery judgment reference value NeJDG (1308), or when the engine speed Ne3 at the time point T1314 increases to be the second combustion recovery judgment reference value NeJDG2 (1309) or more from the engine speed Ne2 (1307) at the time point when the request for change of mind occurs, combustion recovery is judged as possible, and when the condition is not established, combustion recovery is judged as difficult. Thereby, based on the engine speed after the engine combustion recovery function is implemented, the possibility judgment of combustion recovery can be performed. In the present drawing, the result of the possibility judgment of combustion recovery is that the combustion recovery is difficult, and therefore, according to one embodiment according to the present invention, at first, at T1314, the starter motor is energized for a predetermined time period (Energization of the starter motor is stopped at T1315 in the drawing.) after combustion recovery is judged as difficult. Thereafter, when the engine speed and the pinion revolution speed correspond to each other, or at the time point (T1316) when the difference between the engine speed and the pinion revolution speed becomes a predetermined value or less, the magnet switch is turned on, and the pinion gear is connected to the engine. Thereafter, at T1317, the starter motor is energized, whereby torque of the starter motor is supplied to the engine, and the engine can be re-started. At the time point (T1318) when the engine speed (1303) increases, energization of the starter motor (1306) and the magnet switch (1305) is stopped. As one example, the timing of T1316 can be set at the time when the direction of the engine angular acceleration and the direction of the pinion angular acceleration are the same, or the time point when the difference between the engine angular acceleration and the pinion angular acceleration is the predetermined value or less. Further, the description of the present operation only shows one example in idle stop, and the vehicle operation state which achieves idle stop is not limited to this.

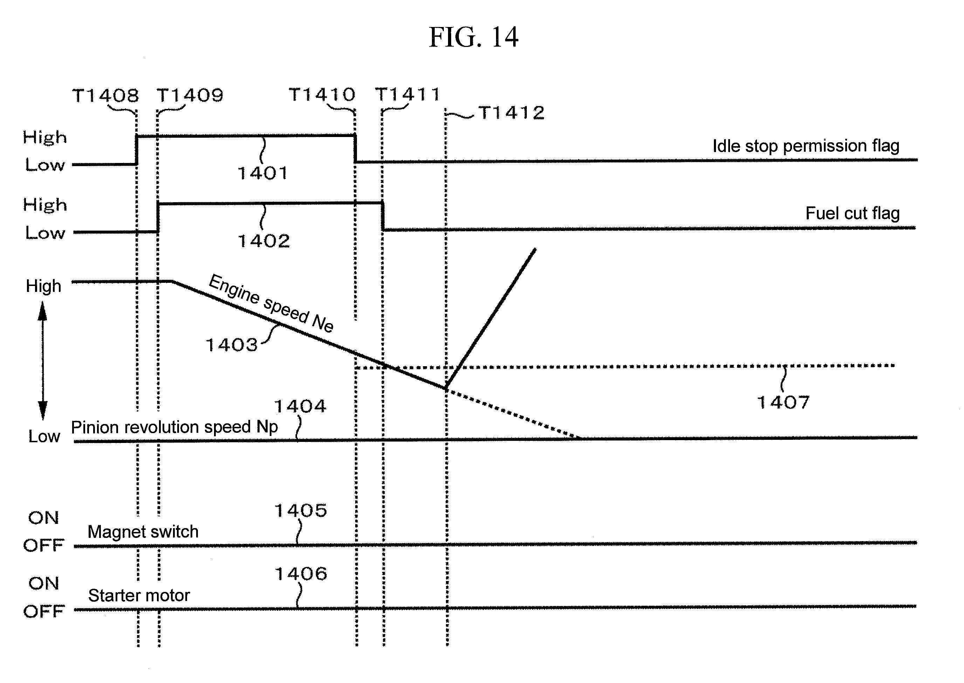

FIG. 14 is a timing chart using a vehicle controller of one embodiment according to the present invention.

Reference numeral 1401 designates an idle stop permission condition flag, which becomes high when permission of implementation of idle stop is judged based on information and the like of various sensors illustrated in FIG. 1, and idle stop is permitted, and becomes low when idle stop is prohibited. Reference numeral 1402 designates a fuel cut flag, which becomes high during implementation of fuel cut, and becomes low when fuel cut is not performed. Reference numeral 1403 designates an engine speed, and reference numeral 1404 designates a pinion revolution speed. Further, reference numeral 1405 designates an energization state of the magnet switch, and reference numeral 1406 designates an energization state to the starter motor. Reference numeral 1407 designates a combustion recovery judgment reference value NeJDG.

Describing the operation in time series, at first, at T1408, the idle stop permission flag (1401) becomes high, a predetermined delay time elapses, fuel cut is implemented, and the fuel cut flag (1402) becomes high (T1409). Thereby, the engine is brought into the state of inertial revolution and starts to be gradually low in speed (1403). At T1410, during inertial revolution of the engine, the idle stop permission flag (1401) becomes low due to a request for change of mind. Here, the vehicle controller of one embodiment according to the present invention performs the possibility judgment of combustion recovery based on the engine speed (1403) at the time point T1410 when the request for change of mind occurs. In more detail, when the engine speed (1403) at the time point T1410 is not less than the combustion recovery judgment reference value NeJDG (1407), or when the deceleration of the engine speed (1403) between T1409 and T1410 is not more than the combustion recovery judgment reference value ΔNeJDG, combustion recovery is judged as possible, and when the condition is not established, combustion recovery is judged as difficult. In the present drawing, description is made by using the engine speed at the time point (T1410) when the request for change of mind occurs. As for the combustion recovery judgment reference value NeJDG (1407), a predetermined value may be set at the ECU (103 in FIG. 1) in advance, or the combustion recovery judgment reference value NeJDG may be calculated from predetermined calculation, but in this case, it is assumed that the lowest engine speed (1403) at which re-start of the engine can be performed by re-starting fuel injection when a request for change of mind occurs is determined by adaptation, and is set in advance. After a predetermined delay time elapses from T1410, control which is necessary for combustion recovery such as fuel injection is implemented by the engine combustion recovery function at T1411, and the engine speed (1103) starts to increase. In the present drawing, the engine is in the state in which combustion recovery is possible, and as for starter drive, starter drive at T1410 when the possibility judgment of combustion recovery is implemented and thereafter is prohibited, and therefore, both the energization (1405) of the magnet switch and the energization (1406) of the starter motor are stopped. Further, the description of the present operation only shows one example in idle stop, and the vehicle operation state which achieves idle stop is not limited to this.

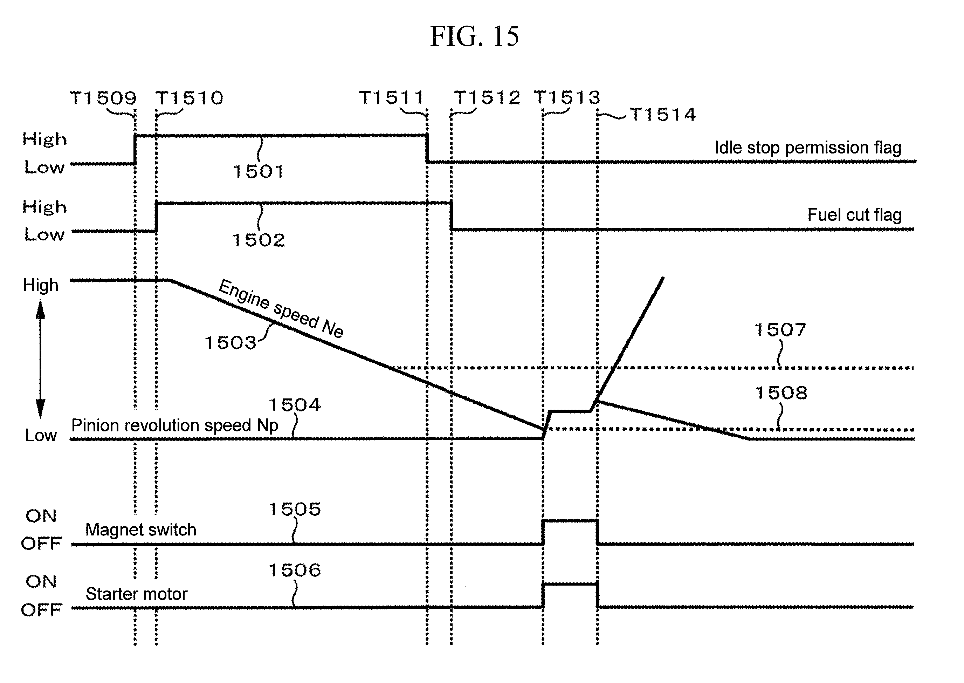

FIG. 15 is a timing chart using a vehicle controller of one embodiment according to the present invention.

Reference numeral 1501 designates an idle stop permission condition flag, which becomes high when the possibility of implementation of idle stop is judged based on information and the like of various sensors illustrated in FIG. 1 and idle stop is permitted, and becomes low when idle stop is prohibited. Reference numeral 1502 designates a fuel cut flag, which becomes high during implementation of fuel cut, and becomes low when fuel cut is not performed. Reference numeral 1503 designates an engine speed, and reference numeral 1504 designates a pinion revolution speed. Further, reference numeral 1505 designates an energization state of the magnet switch, and reference numeral 1506 designates an energization state to the starter motor. Reference numeral 1507 designates a combustion recovery judgment reference value NeJDG, and reference numeral 1508 designates a starter drive permission revolution speed STJDG.

Describing the operation in time series, at first, at T1509, the idle stop permission flag (1501) becomes high, a predetermined delay time elapses, fuel cut is implemented, and the fuel cut flag (1502) becomes high (T1510). Thereby, the engine is brought into the state of inertial revolution and starts to be gradually low in speed (1503). At T1511, during inertial revolution of the engine, the idle stop permission flag (1501) becomes low due to a request for change of mind. Here, the vehicle controller of one embodiment according to the present invention performs possibility (or impossibility) judgment of combustion recovery based on the engine speed (1503) at the time point T1511 when the request for change of mind occurs, or the engine deceleration until T1511. In more detail, when the engine speed (1503) at the time point T1511 is not less than the combustion recovery judgment reference value NeJDG (1507), or when the deceleration of the engine speed (1503) between T1510 and T1511 is not more than the combustion recovery judgment reference value ΔNeJDG, combustion recovery is judged as possible, and when the condition is not established, combustion recovery is judged as difficult. In the present drawing, description is made by using the engine speed at the time point (T1511) when the request for change of mind occurs. As for the combustion recovery judgment reference value NeJDG (1507), a predetermined value may be set at the ECU (103 in FIG. 1) in advance, or the combustion recovery judgment reference value NeJDG may be calculated from predetermined calculation, but in this case, it is assumed that the lowest engine speed (1503) at which re-start of the engine can be performed by re-starting fuel injection when a request for change of mind occurs is determined by adaptation, and is set in advance. After a predetermined delay time elapses from T1511, control which is necessary for combustion recovery such as fuel injection is implemented by the engine combustion recovery function at T1512, and the engine speed (1503) originally increases. However, in the present drawing, the engine is in the state in which favorable combustion recovery cannot be performed, and the engine speed (1503) continues to decrease. Further, in the present drawing, the result of the possibility judgment of combustion recovery is that the combustion recovery is difficult. Therefore, at the time point (T1513) when the engine speed (1503) becomes the starter drive permission revolution speed STJDG (1510) or less, the starter motor (1506) and the magnet switch (1505) are energized, and starter drive is implemented. Thereby, the torque of the starter motor is supplied to the engine, the engine can be re-started, and at the time point (T1514) when the engine speed (1503) increases, energization of the starter motor (1506) and the magnet switch (1505) is stopped. In the present drawing, the timing (T1513) of energization of the starter motor and the magnet switch is described by using the method which compares the engine speed (1503) and the starter drive permission revolution speed STJDG (1508), but the method does not have to be especially limited to this, and, for example, the method or the like which energizes the starter motor (1506) and the magnet switch (1507) after a predetermined time elapses from the time point (T1511) when the request for change of mind occurs, the time point (T1512) when fuel cut is started or the like may be used. Further, the description of the present operation only shows one example in idle stop, and the vehicle operation state which achieves idle stop is not limited to this.

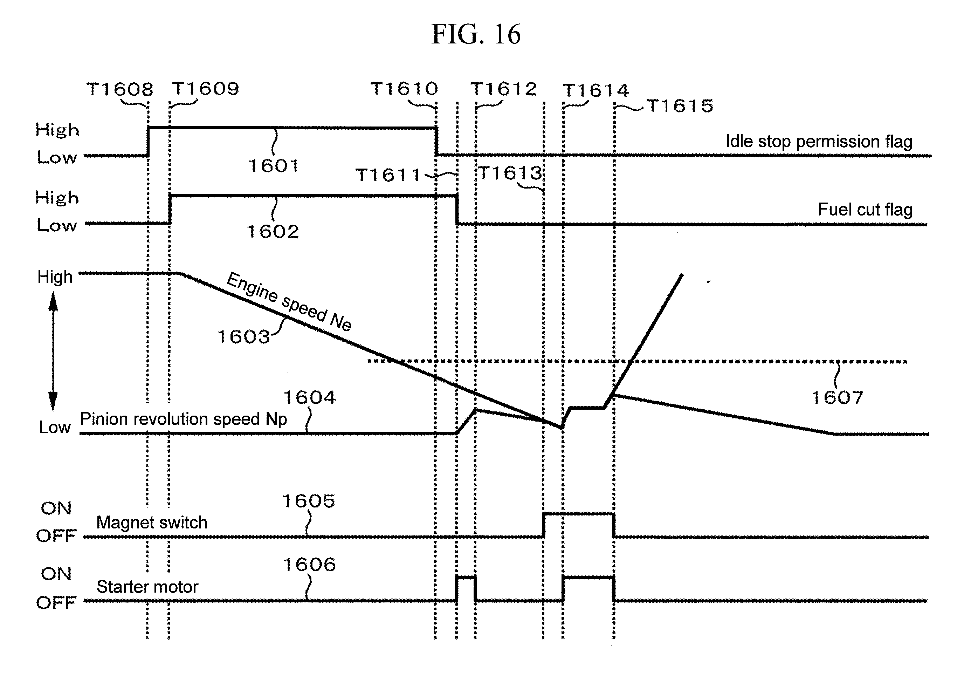

FIG. 16 is a timing chart using a vehicle controller of one embodiment according to the present invention.

Reference numeral 1601 designates an idle stop permission condition flag, which becomes high when permission judgment of implementation of idle stop is performed based on information and the like of various sensors illustrated in FIG. 1, and idle stop is permitted, and becomes low when idle stop is prohibited. Reference numeral 1602 designates a fuel cut flag, which becomes high during implementation of fuel cut, and becomes low when fuel cut is not performed. Reference numeral 1603 designates an engine speed, and reference numeral 1604 designates a pinion revolution speed. Further, reference numeral 1605 designates an energization state of the magnet switch, and reference numeral 1606 designates an energization state to the starter motor. Reference numeral 1607 designates a combustion recovery judgment reference value NeJDG.

Describing the operation in time series, at first, at T1608, the idle stop permission flag (1601) becomes high, a predetermined delay time elapses, fuel cut is implemented, and the fuel cut flag (1602) becomes high (T1609). Thereby, the engine is brought into the state of inertial revolution and starts to be gradually low in speed (1603). At T1610, during inertial revolution of the engine, the idle stop permission flag (1601) becomes low due to a request for change of mind. Here, the vehicle controller of one embodiment according to the present invention performs the possibility judgment of combustion recovery based on the engine speed (1603) at the time point T1610 when the request for change of mind occurs, or the engine deceleration up to T1610. In more detail, when the engine speed (1603) at the time point T1610 is not less than the combustion recovery judgment reference value NeJDG (1607), or when the deceleration of the engine speed (1603) between T1609 and T1610 is not more than the combustion recovery judgment reference value ΔNeJDG, combustion recovery is judged as possible, and when the condition is not established, combustion recovery is judged as difficult. In the present drawing, description is made by using the engine speed at the time point (T1610) when the request for change of mind occurs. As for the combustion recovery judgment reference value NeJDG (1607), a predetermined value may be set at the ECU (103 in FIG. 1) in advance, or the combustion recovery judgment reference value NeJDG may be calculated from predetermined calculation, but in this case, it is assumed that the lowest engine speed (1603) at which re-start of the engine can be performed by re-starting fuel injection when a request for change of mind occurs is determined by adaptation, and is set in advance. In the present drawing, the engine speed (1603) at the time point (T1610) when the request for change of mind occurs is less than the combustion recovery judgment reference value NeJDG (1607), and therefore, the result of the possibility judgment of combustion recovery is that the combustion recovery is difficult. Therefore, at the time point (T1611) when a predetermined time elapses from the time point (T1610) when the request for change of mind occurs, control which is necessary for combustion recovery such as fuel injection is implemented by the engine combustion recovery function, and the engine speed (1603) originally increases. However, in the present drawing, the engine is in the state in which favorable combustion recovery cannot be performed, and the engine speed (1603) continues to decrease. Further, in the present drawing, the result of the possibility judgment of combustion recovery is that the combustion recovery is difficult. Therefore, at T1611, the starter motor is energized for a predetermined time period (In the drawing, energization of the starter motor is stopped at T1612.). The timing of implementation of the engine combustion recovery function and the timing of implementation of energization of the starter motor do not have to be the same timing. By stopping energization of the starter motor at T1612, the pinion gear at T1612 and thereafter is in the state of inertial revolution, and revolution of the pinion is gradually reduced. Thereafter, at the time point (T1613) when at least any one of the conditions is satisfied, that are, the engine speed and the pinion revolution speed correspond to each other, the difference between the engine speed and the pinion revolution speed becomes a predetermined value or less, the direction of the engine angular acceleration and the direction of the pinion angular acceleration become the same, and the difference between the engine angular acceleration and the pinion angular acceleration becomes a predetermined value or less, the magnet switch is turned on, and the pinion gear is connected to the engine. Thereafter, at T1614, the starter motor is energized, the torque of the starter motor is supplied to the engine, and the engine can be re-started. At the time point (T1615) when the engine speed (1603) increases, energization of the starter motor (1606) and the magnet switch (1605) is stopped. Further, the description of the present operation only shows one example in idle stop, and the vehicle operation state which achieves idle stop is not limited to this.

## Claims

1. A controller to be used in an idle stop system that comprises an engine which rotates a crankshaft by supply of a fuel, and a starter motor (101a) which assists start of the engine, and
automatically stops the engine by cutting off supply of the fuel when a predetermined condition is established,
the controller further comprising:
combustion recovery means that supplies a fuel to the engine to re-start the engine;
starter drive means that controls assist of the engine by the starter motor (101a); and
operation state detection means that detects an operation state of the engine,
wherein when a request for change of mind which requests re-start of the engine occurs during a time until the crankshaft stops rotation after the fuel to be supplied to the engine is cut off,
whether to perform assist of the engine by the starter drive means or not is determined based on the operation state detected by the operation state detection means, after supply of the fuel is started by the combustion recovery means.

2. The controller according to claim 1,
wherein whether to start supply of the fuel by the combustion recovery means, and whether to start supply of the fuel by the combustion recovery means and perform assist of the engine by the starter drive means are determined, based on the operation state detected by the operation state detection means.

3. The controller according to claim 1 or 2,
wherein the idle stop system has a pinion gear (101e) included coaxially with a motor shaft of the starter motor (101a), and a ring gear (106) synchronized with revolution of the crankshaft, and the idle stop system assists re-start of the engine after the engine stops by connecting the pinion gear (101e) to the ring gear (106), after rotating the starter motor (101a).

4. The controller according to at least one of claims 1 to 3,
the controller further comprising means for possibility judgment of combustion recovery that judges whether the combustion recovery is possible or difficult in accordance with the operation state of the engine after implementing the combustion recovery means, and prohibits starter drive when a judgment result of the means for possibility judgment of combustion recovery is that combustion recovery is judged as possible.

5. The controller according to claim 3, further comprising means for possibility judgment of combustion recovery that judges whether the combustion recovery is possible or difficult in accordance with the operation state of the engine after implementing the engine combustion recovery means when the request for change of mind occurs in the controller,
wherein when the judgment result of the means for possibility judgment of combustion recovery is that combustion recovery is judged as difficult, the starter motor (101a) is rotated, and thereafter, the pinion gear (101e) is connected to the ring gear (106).

6. The controller according to claim 5,
wherein when a revolution speed of the ring gear (106) and a revolution speed of the pinion gear (101e) correspond to each other, or when a difference between an engine speed and a pinion revolution speed becomes a predetermined value or less, the pinion gear (101e) is connected to the ring gear (106), and thereafter, the starter motor (101a) is energized to rotate the pinion gear (101e).

7. The controller according to claim 5 or 6,
wherein when a direction of an angular acceleration of the ring gear (106) and the direction of an angular acceleration of the pinion gear (101e) are the same, or when a difference between an engine angular acceleration and a pinion angular acceleration is a predetermined value or less, the pinion gear (101e) is connected to the ring gear (106).

8. A controller to be used in an idle stop system that comprises an engine which rotates a crankshaft by supply of a fuel, and a starter motor (101a) which assists start of the engine, and
automatically stops the engine by cutting off supply of the fuel when a predetermined condition is established,
the controller comprising:
combustion recovery means that supplies a fuel to the engine to re-start the engine;
starter drive means that controls assist of the engine by the starter motor (101a); and
operation state detection means that detects an operation state of the engine,
wherein when a request for change of mind which requests re-start of the engine occurs during a time until the crankshaft stops rotation after the fuel to be supplied to the engine is cut off,
whether to start supply of the fuel by the combustion recovery means, and whether to start supply of the fuel by the combustion recovery means and perform assist of the engine by the starter drive means are determined, based on the operation state detected by the operation state detection means.

9. The vehicle controller according to any one of claims 1 to 8,
wherein the operation state is at least one of a revolution speed of the crankshaft, acceleration of the engine, a pressure in a cylinder, and presence or absence of occurrence of combustion.

10. The controller according to any one of claims 1 to 9,
wherein the combustion recovery means controls at least a fuel amount to be supplied to the engine, a fuel supply timing and an ignition timing.
